# EUROPEAN PATENT APPLICATION

(11) **EP 4 852 469 A1**
(43) Date of publication of application: **09.12.2026**
(21) Application number: 25218309.0
(22) Date of filing: 25.11.2025
(51) Int. Cl.: H04W 4/10, H04W 4/80, H04W 8/00, H04W 40/02, H04W 40/24, H04W 84/18, H04W 84/20, H04W 88/04, G06F 3/16

(54) **METHOD FOR IMPROVING COMMUNICATION STABILITY OF AD HOC NETWORK TEAM COMMUNICATION DEVICE BY USING MOBILE PHONE**

(30) Priority: 06.06.2025 CN 202510751156
(71) Applicant: Beijing LangRen Technology Co., Ltd., Beijing 100078 (CN)
(72) Inventor: Yu, Xianglong, Chengde City, Hebei Province, 067000 (CN); Tian, Geng, Shenzhen City, Guangdong Province, 518000 (CN); Zeng, Qilin, Shenzhen City, Guangdong Province, 518000 (CN); Liu, Feng, Beijing, 100012 (CN)
(74) Representative: Cleanthous, Marinos

(57) **Abstract**

A method for improving communication stability of an Ad Hoc network team formation communication device by using a mobile phone is provided. The method includes: constructing a network topology, and forming a logic concept network composed of hard Mesh and soft Mesh, where the hard Mesh is completed by a Bluetooth low energy (BLE) chip with a Mesh protocol, to implement peer-to-peer connection establishment between devices, and transmission or relay transmission of audios. The soft Mesh is implemented through a mobile phone application (APP) and is a standby connection supplement solution when the hard Mesh has a poor signal. The method achieves a purpose of improving the communication stability by using a low-coupling and low-power solution without additionally adding another device, and has industrial advancement. A Bluetooth Mesh device usually has a function such as being connected to a mobile phone to listen to music.

## Description

### TECHNICAL FIELD

The present disclosure relates to the field of intelligent wearable devices, and in particular, to a method for improving communication stability of an Ad Hoc network team formation communication device by using a mobile phone.

### BACKGROUND

An existing Bluetooth Mesh-based Ad Hoc network device can implement Ad Hoc network team formation communication without a mobile phone device, but in scenarios, such as an urban area, with good mobile phone networks, the communication effect will be greatly reduced due to a large number of interferences in a 2.4G frequency band.

Current common solutions have shortcomings:
Increasing the transmission power can ensure that a signal is propagated further and is more resistant to interference, but there are many problems. In one aspect, increasing the transmission power means higher energy consumption. In another aspect, both domestic short range radio certification (SRRC) and foreign federal communications commission (FCC) and CONFORMITE EUROPEENNE (CE) certifications restrain an upper limit of a power spectrum density, and an interference source is that the same space has an excessively large density of 2.4G devices. Increasing the power will also affect the effects of other devices such as Bluetooth and WiFi.

The overall scheme of adding a 5G or WiFi module and supplementing and optimizing the communication performance through a transmission control protocol/Internet protocol (TCP/IP) is feasible, but there is a problem of high logic complexity inside a chip. Analog audio signals transmitted by Bluetooth and digital audio signals transmitted by a TCP/IP network need to be decoded and deduplicated to avoid echo interference. Meanwhile, a complex firmware logic leads to increased energy consumption, which is not suitable for pursuing lightweight wearable devices.

In a pure Internet solution, similar conference software is developed, which has a voice group chat function and is connected through ordinary Bluetooth earphones for communication. This solution is not feasible in places with poor mobile phone network signal, and will be greatly limited in outdoor scenarios.

Therefore, it is necessary to provide a method for improving communication stability of an Ad Hoc network team formation communication device by using a mobile phone to solve the above technical problems.

### SUMMARY

The present disclosure provides a method for improving communication stability of an Ad Hoc network team formation communication device by using a mobile phone, and solves the problem that a Bluetooth Mesh-based Ad Hoc network device has a poor communication effect in scenarios such as an urban area, so that an existing solution has severe shortcomings, the problem that increasing the transmission power leads to high energy consumption, certification restriction, and interference with other devices, the problem that adding a 5G or WiFi module can make a chip and a firmware logic complex and increase energy consumption and is not applicable to lightweight wearable devices, and the problem that a pure Internet solution has poor mobile phone signal and is severely restrained in outdoor scenarios.

To solve the above technical problems, the method for improving the communication stability of the Ad Hoc network team formation communication device by using the mobile phone that is provided by the present disclosure includes the following steps:
S1: constructing a network topology, and forming a logic concept network composed of hard Mesh and soft Mesh, wherein the hard Mesh is completed by a Bluetooth low energy (BLE) chip with a Mesh protocol, to implement peer-to-peer connection establishment between devices, and transmission or relay transmission of audios; the soft Mesh is implemented through a mobile phone application (APP) and is a standby connection supplement solution when the hard Mesh has a poor signal;
S2: determining a communication logic to ensure that there is only one voice path between two users at a time point, reporting a team formation situation to a background through the mobile phone, analyzing, by the background, connection information planning grouplet and assigning a unique soft Mesh routing node (R), and backhauling a routing table to the device to shield repeated sounds, where a backhauling manner uses APP+ Mesh communication; and
S3: designing a hardware solution to cause a Bluetooth chip and a Mesh chip to be connected through universal asynchronous receiver/transmitter (UART) transmitted data and inter-IC sound (I2S) transmitted audios, wherein the Bluetooth chip as a main control chip is in charge of being connected to the mobile phone and coordinating a plurality of audio paths, to implement functions such as music listening, Mesh audio receiving, Mesh speaking, and call making, and add a particular voice transmission path when the soft Mesh is implemented.

Preferably, a team formation manner for the hard Mesh in S1 is that a plurality of devices enter a team formation state or perform an appointed action, are aware of each other, and appoint the same channel and the same team formation serial number for communication; after team formation is completed, closest devices with the same team formation serial number communicate with each other and dynamically form a network; and the routing table is dynamically updated along with device connection states.

Preferably, during team formation, the soft Mesh in S1 records all node lists of a current team and synchronizes the node lists to the mobile phone; after team formation is completed, the lists no long change; a server records a current state of each user in a group; one hard Mesh group has only one soft Mesh routing node (R) at most; and a selection logic is determined in a background service.

Preferably, the sound mixing logic is as follows: when an ordinary node (c) listens, if there is a routing table and the table includes (R), a Mesh chip is informed of releasing a hard Mesh node and an offline node based on a white list; if there is no routing table, all sounds are released;
when the ordinary node (c) speaks, a mic sound is transmitted to the Mesh chip;
if the ordinary node (c) is (R), a filtered sound and a mic mixed sound are transmitted to a mobile phone Bluetooth APP, and an APP sound and the mic mixed sound that are received by the mobile phone Bluetooth APP are transmitted to the Mesh chip; and
if the ordinary node (c) is a hard Mesh routing node (r), the mesh chip forwards all the sounds based on an original logic without using a micro control unit (MCU) and performing filtering.

Preferably, a receiving rule for the routing table is as follows: an update timing is the APP or the (R) being actively synchronized, and the (r) and the (c) regularly search for update;
the (R) synchronizes a routing table of a subnet of the (R) from the APP and then broadcasts a latest routing table from Mesh;
when the (r) and the (c) form a team, there is an initial routing table which is dynamically updated in a team formation process; if the (r) and the (c) are connected to the APP, the (r) and the (c) are processed based on an APP synchronization manner; if the (r) and the (c) are not connected to the mobile phone, whether to receive the routing table synchronized by the hard Mesh is determined based on a connection state of the (R) in the routing table; and if the (R) in the own routing table is not connected or there is no (R), a routing table transmitted by another node in a group is received, and an own part is maintained.

Preferably, when a team formation situation of the hard Mesh changes, the Mesh chip senses, by relying on a state sensing capacity of the Mesh chip, that a hard Mesh node or a hard routing node (r) changes and immediately informs an MCU chip, including synchronizing a hard Mesh routing table to the mobile phone APP in real time in a team formation process; after team formation is decided, a group list on which the soft Mesh depends no long changes, but hard Mesh state change information is still synchronized to the APP; and the APP is informed of operations such as connecting or disconnecting nodes, turning off Mesh or performing rematching, and turning on Mesh again, and corresponding processing is performed.

Preferably, a logic of the APP includes binding a user system to a device ID; during team formation, a group is created, and a member list, namely a routing table, in the group is determined; the group is frozen when no one is online; the group is dissolved or deleted if the group is not used for a long time; and a real-time voice call connection is established if all nodes (R) are online.

Preferably, a logic of the background includes managing users, group relationships, group states, calculating a routing table, creating a group, obtaining all routing tables through the APP every time when routing of the hard Mesh changes, calculating connection relationships, performing hard Mesh grouping and node (R) selection, and calculating and transmitting a soft routing table of each node; and calculation and transmission timing is that hard Mesh routing information changes or device routing table information update is not returned after 10 seconds.

Preferably, in a team formation scenario of the hard Mesh, multiple users use Mesh networking functions of devices to complete team formation, and at least one user confirms completion of the team formation on the mobile phone APP; at the moment, a routing table list is confirmed; if a mobile phone APP in the team is online, voice information is not transmitted through the mobile phone APP when hard Mesh interconnection is normal.

Preferably, when loss of communication, division, node movement, combination, and the like occur in the hard Mesh, a routing table and a voice transmission path are amplified and adjusted through the soft Mesh to ensure that all nodes still hear sounds of other nodes and maintain communication stability.

Compared with the related art, the method for improving the communication stability of the Ad Hoc network team formation communication device by using the mobile phone that is provided by the present disclosure has the following beneficial effects:
The method for improving the communication stability of the Ad Hoc network team formation communication device by using the mobile phone achieves a purpose of improving the communication stability by using a low-coupling and low-power solution without additionally adding another device, and has industrial advancement.

A Bluetooth Mesh device usually has a function such as being connected to a mobile phone to listen to music. The solution implements "a second network" through an APP and makes a proper use of the capacity of existing devices around.

By controlling a routing table, a phenomenon that a sound of a single node simultaneously appears in two networks is avoided, and low coupling of two networks is implemented.

A routing table algorithm is performed in a background server to release computing power of a terminal, thus reducing the complexity of distributed calculation.

No additional algorithm is added at a device, so that a chip with high computing power is not required, which provides an alternative solution for a lightweight wearable device.

### BRIEF DESCRIPTION OF THE DRAWINGS

FIG. 1 is a schematic structural diagram of a preferred embodiment of a method for improving communication stability of an Ad Hoc network team formation communication device by using a mobile phone according to the present disclosure; and
FIG. 2 is a schematic structural diagram of hardware connection.

### DETAILED DESCRIPTION OF THE EMBODIMENTS

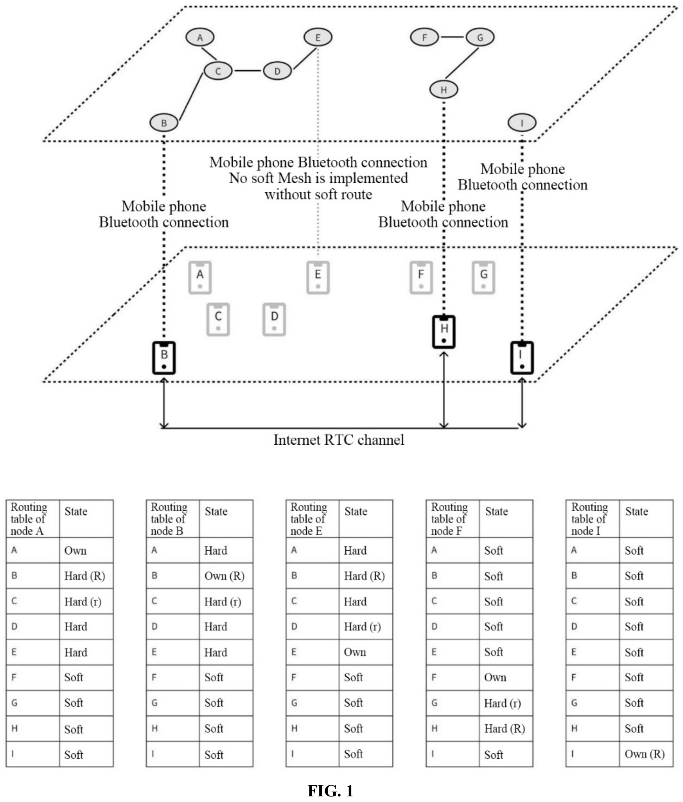

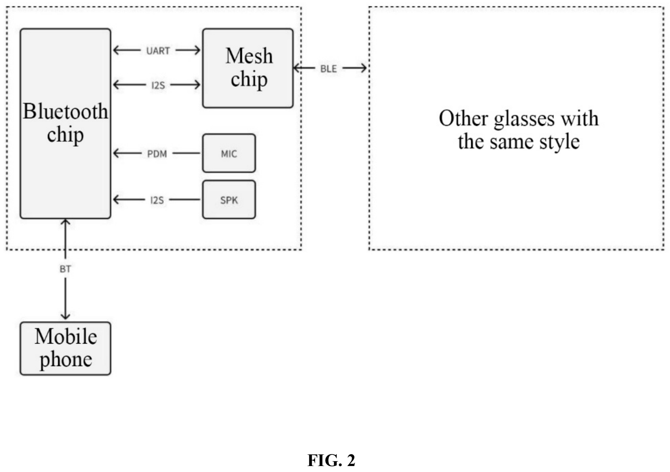

The present disclosure will be further explained below in conjunction with the accompanying drawings and implementations:
Referring to FIG. 1 and FIG. 2 together, FIG. 1 is a schematic structural diagram of a preferred embodiment of a method for improving communication stability of an Ad Hoc network team formation communication device by using a mobile phone according to the present disclosure, and FIG. 2 is a schematic structural diagram of hardware connection. A method for improving communication stability of an Ad Hoc network team formation communication device by using a mobile phone includes the following steps:
S1: constructing a network topology, and forming a logic concept network composed of hard Mesh and soft Mesh, wherein the hard Mesh is completed by a Bluetooth low energy (BLE) chip with a Mesh protocol, to implement peer-to-peer connection establishment between devices, and transmission or relay transmission of audios; the soft Mesh is implemented through a mobile phone application (APP) and is a standby connection supplement solution when the hard Mesh has a poor signal;
S2: determining a communication logic to ensure that there is only one voice path between two users at a time point, reporting a team formation situation to a background through the mobile phone, analyzing, by the background, connection information planning grouplet and assigning a unique soft Mesh routing node (R), and backhauling a routing table to the device to shield repeated sounds, where a backhauling manner uses APP+ Mesh communication; and
S3: designing a hardware solution to cause a Bluetooth chip and a Mesh chip to be connected through universal asynchronous receiver/transmitter (UART) transmitted data and inter-IC sound (I2S) transmitted audios, wherein the Bluetooth chip as a main control chip is in charge of being connected to the mobile phone and coordinating a plurality of audio paths, to implement functions such as music listening, Mesh audio receiving, Mesh speaking, and call making, and add a particular voice transmission path when the soft Mesh is implemented.

A team formation manner for the hard Mesh in S1 is that a plurality of devices enter a team formation state or perform an appointed action, are aware of each other, and appoint the same channel and the same team formation serial number for communication; after team formation is completed, closest devices with the same team formation serial number communicate with each other and dynamically form a network; and the routing table is dynamically updated along with device connection states.

During team formation, the soft Mesh in S1 records all node lists of a current team and synchronizes the node lists to the mobile phone; after team formation is completed, the lists no long change; a server records a current state of each user in a group; one hard Mesh group has only one soft Mesh routing node (R) at most; and a selection logic is determined in a background service.

The sound mixing logic is as follows: when an ordinary node (c) listens, if there is a routing table and the table includes (R), a Mesh chip is informed of releasing a hard Mesh node and an offline node based on a white list; if there is no routing table, all sounds are released;
when the ordinary node (c) speaks, a mic sound is transmitted to the Mesh chip;
if the ordinary node (c) is (R), a filtered sound and a mic mixed sound are transmitted to a mobile phone Bluetooth APP, and an APP sound and the mic mixed sound that are received by the mobile phone Bluetooth APP are transmitted to the Mesh chip; and
if the ordinary node (c) is a hard Mesh routing node (r), the mesh chip forwards all the sounds based on an original logic without using a micro control unit (MCU) and performing filtering.

A receiving rule for the routing table is as follows: an update timing is the APP or the (R) being actively synchronized, and the (r) and the (c) regularly search for update;
the (R) synchronizes a routing table of a subnet of the (R) from the APP and then broadcasts a latest routing table from Mesh;
when the (r) and the (c) form a team, there is an initial routing table which is dynamically updated in a team formation process; if the (r) and the (c) are connected to the APP, the (r) and the (c) are processed based on an APP synchronization manner; if the (r) and the (c) are not connected to the mobile phone, whether to receive the routing table synchronized by the hard Mesh is determined based on a connection state of the (R) in the routing table; and if the (R) in the own routing table is not connected or there is no (R), a routing table transmitted by another node in a group is received, and an own part is maintained.

When a team formation situation of the hard Mesh changes, the Mesh chip senses, by relying on a state sensing capacity of the Mesh chip, that a hard Mesh node or a hard routing node (r) changes and immediately informs an MCU chip, including synchronizing a hard Mesh routing table to the mobile phone APP in real time in a team formation process; after team formation is decided, a group list on which the soft Mesh depends no long changes, but hard Mesh state change information is still synchronized to the APP; and the APP is informed of operations such as connecting or disconnecting nodes, turning off Mesh or performing rematching, and turning on Mesh again, and corresponding processing is performed.

A logic of the APP includes binding a user system to a device ID; during team formation, a group is created, and a member list, namely a routing table, in the group is determined; the group is frozen when no one is online; the group is dissolved or deleted if the group is not used for a long time; and a real-time voice call connection is established if all nodes (R) are online.

A logic of the background includes managing users, group relationships, group states, calculating a routing table, creating a group, obtaining all routing tables through the APP every time when routing of the hard Mesh changes, calculating connection relationships, performing hard Mesh grouping and node (R) selection calculating and transmitting a soft routing table of each node; and calculation and transmission timing is that hard Mesh routing information changes or device routing table information update is not returned after 10 seconds.

In a team formation scenario of the hard Mesh, multiple users use Mesh networking functions of devices to complete team formation, and at least one user confirms completion of the team formation on the mobile phone APP; at the moment, a routing table list is confirmed; if a mobile phone APP in the team is online, voice information is not transmitted through the mobile phone APP when hard Mesh interconnection is normal.

When loss of communication, division, node movement, combination the like occur in the hard Mesh, a routing table and a voice transmission path are amplified and adjusted through the soft Mesh to ensure that all nodes still hear sounds of other nodes and maintain communication stability.

### Scenarios and steps

### First scenario: the hard Mesh performs networking

In a network topological graph, nine users from A to I use nine devices to perform a networking activity. First, the nine users need to use a Mesh networking function of the devices to complete team formation.

At least one user (for example, B) confirms completion of the team formation on a mobile phone APP. In this case, a whole routing table list is confirmed.

It is assumed that two users (B and H) in the team open the mobile phone APP. The two users can see list states of the nine users: the nine users are connected to each other through hard Mesh.

In this case, all the users are connected and communicate with each other by using the Mesh networking function, so that even if two mobile phone APPs are online, voice information can be transmitted without the mobile phone APPs.

### Second scenario: the hard Mesh loses communication loss and the soft Mesh is amplified

If an activity range is expanded at this time, node I is alone, and will disappear from hard Mesh routing tables of the eight devices from A to H. A hard Mesh routing table of I becomes empty.

Before I opens the mobile phone APP, the background reports, based on the routing tables of B and H, that I is in a communication loss and offline state.

I opens the mobile phone APP and tries to perform soft Mesh amplification. When B confirms the completion of the team formation, I is in this group. After the APP is logged in, the background can set B (or H) to R1 and set I to R2.

The background can create a multi-user real-time voice call room and add B and I into the room for connection through the APP.

B can transmit sounds of all the users to the mobile phone APP, including voices of B that are inputted as sounds of B. Thus, I can hear the sounds of all other users.

Meanwhile, B can transmit the sounds in the mobile phone, including the sounds of B, to the Mesh chip and broadcast the sounds, so that the other seven nodes (A and C to H) can hear the sounds of I.

### Third scenario: the hard Mesh is divided into two groups

In this case, the activity range is continued to be expanded. The original eight users are divided into two groups that are connected to each other (one group includes A to E, and one group includes F, G, and H). I still forms a group alone.

In this case, F, G, and H disappear from hard Mesh team formation information of A to H, and A to E disappear from the hard Mesh routing tables of F, G, and H.

Since B and H are online, the background can calculate and know that eight users are divided into two groups, instead of knowing that several users are offline. Therefore, the background can use H as R of a new group, i.e. R3.

In this case, a calculated routing table will be the same as that shown in the above graph.

The background can inform the three nodes (R) B, H, I of the calculated routing table through the APP, and the three nodes can then synchronize the information to other user in the same group through Mesh.

The backend can add a mobile APP node of H into a soft Mesh real-time voice group in which nodes B, H, I communicate with one another. B can transmit sounds of five users A to E and transmit sounds of H and I back to the group in a meeting. H can also transmit the sounds of F, G, H and receive all the sounds of B and I in the meeting.

At this point, all the nodes can still hear the sounds of all other nodes, and continue to communicate imperceptibly through soft Mesh amplification.

### Fourth scenario: A node leaves a hard Mesh group and joins another

In this case, F moves towards E, and a hard Mesh distance is out of a range of G. If F opens the mobile APP, F will join the soft Mesh real-time voice group as a separate group like I. However, since F does not open the mobile APP, the hard Mesh routing tables reported by B, H, I do not include F, and F will lose communication and go offline.

F continues to move towards E, and a distance falls within a hard Mesh connection range, so that F can communicate through hard Mesh. However, since it has just been connected, F is still in a weak connection state.

F is not connected with other nodes, so that the routing table of F may be modified to the group with A to E, that is six users A to F form a hard Mesh group, and the three groups still communicate through soft Mesh amplification.

### Fifth scenario: two hard Mesh groups are combined

In this case, G and H also move towards E and F, and G is first in contact with F.

Due to a hard Mesh Ad Hoc network mechanism, G and F can become (r) nodes, and the eight users A to H will become an interconnected group.

Since G and F have just been connected, G and F are in a weak connection state within three seconds, and no nodes among A to H go offline and lose communication. Therefore, the routing table still indicates that A to F form a group, G and H form a group, and I is in a separate group. To avoid poor signal when G and F are just connected, nodes A to F can block the sounds of G and H based on a white list rule, and the sounds of G and H will continue to be transmitted from the soft Mesh. Similarly, G and H will also block the sounds of A to F and are connected from the soft Mesh.

After three seconds, it is considered that the connection between G and F is stable, A to H form a group. In this case, the APP of B (or H) exits the voice room, and the soft Mesh becomes two groups for communication. H and I are nodes (R).

Compared with the related art, the method for improving the communication stability of the Ad Hoc network team formation communication device by using the mobile phone that is provided by the present disclosure has the following beneficial effects:
The method for improving the communication stability of the Ad Hoc network team formation communication device by using the mobile phone achieves a purpose of improving the communication stability by using a low-coupling and low-power solution without additionally adding another device, and has industrial advancement.

A Bluetooth Mesh device usually has a function such as being connected to a mobile phone to listen to music. The solution implements "a second network" through an APP and makes a proper use of the capacity of existing devices around.

By controlling a routing table, a phenomenon that a sound of a single node simultaneously appears in two networks is avoided, and low coupling of two networks is implemented.

A routing table algorithm is performed in a background server to release computing power of a terminal, thus reducing the complexity of distributed calculation.

No additional algorithm is added at a device, so that a chip with high computing power is not required, which provides an alternative solution for a lightweight wearable device.

The above describes only the embodiments of the present disclosure and does not limit the patent scope of the present disclosure. Any equivalent structure or equivalent process transformation made using the specification and accompanying drawings of the present disclosure, or directly or indirectly applied in other related technical fields, are equally included in the scope of patent protection of the present disclosure.

## Claims

1. A method for improving communication stability of an Ad Hoc network team formation communication device by using a mobile phone, comprising the following steps:
S1: constructing a network topology, and forming a logic concept network composed of hard Mesh and soft Mesh, wherein the hard Mesh is completed by a Bluetooth low energy (BLE) chip with a Mesh protocol, to implement peer-to-peer connection establishment between devices, and transmission or relay transmission of audios; the soft Mesh is implemented through a mobile phone application (APP) and is a standby connection supplement solution when the hard Mesh has a poor signal;
S2: determining a communication logic to ensure that there is only one voice path between two users at a time point, reporting a team formation situation to a background through the mobile phone, analyzing, by the background, connection information planning grouplet and assigning a unique soft Mesh routing node (R), and backhauling a routing table to the device to shield repeated sounds, wherein a backhauling manner uses APP+ Mesh communication; and
S3: designing a hardware solution to cause a Bluetooth chip and a Mesh chip to be connected through universal asynchronous receiver/transmitter (UART) transmitted data and inter-IC sound (I2S) transmitted audios, wherein the Bluetooth chip as a main control chip is in charge of being connected to the mobile phone and coordinating a plurality of audio paths, to implement functions such as music listening, Mesh audio receiving, Mesh speaking, and call making, and add a particular voice transmission path when the soft Mesh is implemented.

2. The method for improving the communication stability of the Ad Hoc network team formation communication device by using the mobile phone according to claim 1, wherein a team formation manner for the hard Mesh in S1 is that a plurality of devices enter a team formation state or perform an appointed action, are aware of each other, and appoint the same channel and the same team formation serial number for communication; after team formation is completed, closest devices with the same team formation serial number communicate with each other and dynamically form a network; and the routing table is dynamically updated along with device connection states.

3. The method for improving the communication stability of the Ad Hoc network team formation communication device by using the mobile phone according to claim 1, wherein during team formation, the soft Mesh in S1 records all node lists of a current team and synchronizes the node lists to the mobile phone; after team formation is completed, the lists no long change; a server records a current state of each user in a group; one hard Mesh group has only one soft Mesh routing node (R) at most; and a selection logic is determined in a background service.

4. The method for improving the communication stability of the Ad Hoc network team formation communication device by using the mobile phone according to claim 1, wherein a sound mixing logic is as follows: when an ordinary node (c) listens, if there is a routing table and the table comprises (R), a Mesh chip is informed of releasing a hard Mesh node and an offline node based on a white list; if there is no routing table, all sounds are released;
when the ordinary node (c) speaks, a mic sound is transmitted to the Mesh chip;
if the ordinary node (c) is (R), a filtered sound and a mic mixed sound are transmitted to the mobile phone APP, and an APP sound and the mic mixed sound that are received by the mobile phone APP are transmitted to the Mesh chip; and
if the ordinary node (c) is a hard Mesh routing node (r), the mesh chip forwards all the sounds based on an original logic without using a micro control unit (MCU) and performing filtering.

5. The method for improving the communication stability of the Ad Hoc network team formation communication device by using the mobile phone according to claim 1, wherein a receiving rule for the routing table is as follows: an update timing is the APP or the (R) being actively synchronized, and the (r) and the (c) regularly search for update;
the (R) synchronizes a routing table of a subnet of the (R) from the APP and then broadcasts a latest routing table from Mesh;
when the (r) and the (c) form a team, there is an initial routing table which is dynamically updated in a team formation process; if the (r) and the (c) are connected to the APP, the (r) and the (c) are processed based on an APP synchronization manner; if the (r) and the (c) are not connected to the mobile phone, whether to receive the routing table synchronized by the hard Mesh is determined based on a connection state of the (R) in the routing table; and if the (R) in the own routing table is not connected or there is no (R), a routing table transmitted by another node in a group is received, and an own part is maintained.

6. The method for improving the communication stability of the Ad Hoc network team formation communication device by using the mobile phone according to claim 1, wherein when a team formation situation of the hard Mesh changes, the Mesh chip senses, by relying on a state sensing capacity of the Mesh chip, that a hard Mesh node or a hard Mesh routing node (r) changes and immediately informs an MCU chip, comprising synchronizing a hard Mesh routing table to the mobile phone APP in real time in a team formation process; after team formation is decided, a group list on which the soft Mesh depends no long changes, but hard Mesh state change information is still synchronized to the APP; and the APP is informed of operations such as connecting or disconnecting nodes, turning off Mesh or performing rematching, and turning on Mesh again, and corresponding processing is performed.

7. The method for improving the communication stability of the Ad Hoc network team formation communication device by using the mobile phone according to claim 1, wherein a logic of the APP comprises binding a user system to a device ID; during team formation, a group is created, and a member list, namely a routing table, in the group is determined; the group is frozen when no one is online; the group is dissolved or deleted if the group is not used for a long time; and a real-time voice call connection is established if all nodes (R) are online.

8. The method for improving the communication stability of the Ad Hoc network team formation communication device by using the mobile phone according to claim 1, wherein a logic of the background comprises managing users, group relationships, group states, calculating a routing table, creating a group, obtaining all routing tables through the APP every time when routing of the hard Mesh changes, calculating connection relationships, performing hard Mesh grouping and node (R) selection, and calculating and transmitting a soft routing table of each node; and calculation and transmission timing is that hard Mesh routing information changes or device routing table information update is not returned after 10 seconds.

9. The method for improving the communication stability of the Ad Hoc network team formation communication device by using the mobile phone according to claim 1, wherein in a team formation scenario of the hard Mesh, multiple users use Mesh networking functions of devices to complete team formation, and at least one user confirms completion of the team formation on the mobile phone APP; at the moment, a routing table list is confirmed; if a mobile phone APP in the team is online, voice information is not transmitted through the mobile phone APP when hard Mesh interconnection is normal.

10. The method for improving the communication stability of the Ad Hoc network team formation communication device by using the mobile phone according to claim 1, wherein when loss of communication, division, node movement, combination, and the like occur in the hard Mesh, a routing table and a voice transmission path are amplified and adjusted through the soft Mesh to ensure that all nodes still hear sounds of other nodes and maintain communication stability.
